# EUROPÄISCHE PATENTSCHRIFT

(11) **EP 1 951 465 B1**
(45) Veröffentlichungstag und Bekanntmachung des Hinweises auf die Patenterteilung: **12.01.2011**
(21) Anmeldenummer: 06819348.1
(22) Anmeldetag: 09.11.2006
(51) Int. Cl.: B23D 59/00, B23Q 5/58, B23Q 11/00, B23Q 17/22, B27G 19/02, F16P 3/14

(54) **WERKZEUGMASCHINENÜBERWACHUNGSVORRICHTUNG**
MACHINE-TOOL MONITORING DEVICE
DISPOSITIF DE SURVEILLANCE D'UNE MACHINE-OUTIL

(30) Priorität: 14.11.2005 DE 102005054128
(43) Veröffentlichungstag der Anmeldung: 06.08.2008
(73) Patentinhaber: ROBERT BOSCH GMBH, 70442 Stuttgart (DE)
(72) Erfinder: MAHLER, Michael, 70771 Leinfelden-Echterdingen (DE); KRAPF, Reiner, 72770 Reutlingen (DE)
(86) Internationale Anmeldenummer: PCT/EP2006/068270
(87) Internationale Veröffentlichungsnummer: WO 2007/054529

(56) Entgegenhaltungen:
- EP-A1- 1 422 022
- DE-A1- 4 020 551
- DE-A1- 19 813 041

## Beschreibung

### Stand der Technik

Die Erfindung geht aus von einer Werkzeugmaschinenüberwachungsvorrichtung.

Aus der DE 102 61 791 A1 ist eine Werkzeugmaschinenüberwachungsvorrichtung für eine Kreissäge bekannt. Diese weist eine Sensoreinheit zur Erzeugung und Erfassung eines elektromagnetischen Signals auf, welche in der Nähe eines Sägeblatts angeordnet ist. Ein Annähern eines Körperteils an das Sägeblatt kann durch Überwachung des Signalspektrums detektiert werden. Als Frequenzband für das Signal wird ein lizenzfreies Band gewählt.

Die EP 1422 022 A1 beschreibt ein Kraftwerkzeug, wie beispielsweise eine Tischsäge oder eine Gehrungssäge mit einer Schutzvorrichtung zum Verhindern, dass ein Schneidwerkzeug in Berührung mit Objekten, die nicht das Werkstück sind, gelangt. Die Vorrichtung der EP 1422 022 A1 weist dazu Mittel zum Erfassen der Position von Objekten auf, die nicht das Werkstück sind, die sich jedoch innerhalb eines ersten vorbestimmten Gebietes in der Umgebung des Schneidwerkzeugs bewegen. Das Erfassungsmittel weist ein erstes Radar zum Übertragen von Funkquellen in Richtung auf das vorbestimmte Gebiet und zum Empfangen von davon reflektierten Wellen auf. Ein Prozessor der Vorrichtung bestimmt sowohl den Ort dieser Objekte, als auch deren Annäherungsgeschwindigkeit auf das Schneidwerkzeug hin. Übertrifft die erfasste Geschwindigkeit des detektierten Objektes einen vorgegebenen Grenzwert, so wird der Motor des Kraftwerkzeuges gestoppt. Vorzugsweise werden in einer ersten Ausführungsform Einzelfrequenzradiowellen aus einem Bereich von 3 bis 30 GHz, insbesondere Signale bei 10, 5 GHz zur Detektion benutzt. Darüber hinaus führt die EP 1422 022 A1 aus, dass neben Einzelfrequenzsignalen auch Impulse, d.h. Signale mit einer spektralen Randbreite nutzbar sind.

Aus der US 2005/0179585 A1 ist ein Verfahren und eine Vorrichtung für Ultrabreit band radar bekannt.

### Vorteile der Erfindung

Die Erfindung geht aus von einer Werkzeugmaschinenüberwachungsvorrichtung.

Es wird vorgeschlagen, dass die Werkzeugmaschinenüberwachungsvorrichtung eine für einen Ultrabreitbandbetrieb vorgesehene Signaleinheit aufweist. Es kann mit einer Nutzung von ultrabreitbandigen Signalen eine hohe Informationsdichte und dadurch eine effektive Überwachung erreicht werden. Insbesondere können mehrere Arbeitsparameter bei einer Anwendung einer Werkzeugmaschine gleichzeitig überwacht werden, wodurch sichere und komfortable Arbeitsbedingungen erreichbar sind. Unter einer für einen Ultrabreitbandbetrieb vorgesehenen Signaleinheit soll eine Einheit verstanden werden, mittels der ein ultrabreitbandiges Signal erzeugt, empfangen und/oder ausgewertet werden kann. Unter einem "ultrabreitbandigen Signal" soll Signal verstanden werden, welches ein Frequenzspektrum mit einer Mittenfrequenz und einer Frequenzbandbreite von zumindest 500 MHz aufweist. Die Mittenfrequenz ist vorzugsweise im Frequenzbereich von 1 GHz bis 15 GHz gewählt.

Es wird außerdem vorgeschlagen, dass die Signaleinheit zur Bearbeitung eines Signals vorgesehen ist, welches eine Folge von Pulsen aufweist. Dadurch können große Frequenzbandbreiten erreicht werden. Bei der Bearbeitung des Signals kann das Signal insbesondere erzeugt, empfangen und/oder ausgewertet werden. Unter einer "Folge" von Pulsen soll insbesondere eine Reihe von zeitlich aufeinander folgenden Pulsen verstanden werden. Ein Puls kann in einer Darstellung der Signalamplitude gegen die Zeit von einem bestimmten Muster gebildet sein, wie z.B. einem Rechteck, einem gaußschen Profil usw. Eine Pulsdauer bzw. eine die Übertragungszeit des Musters charakterisierende Größe ist vorzugsweise im Bereich von 0,1 ns (Nanosekunde) bis 2 ns gewählt. Innerhalb der Folge können die Pulse zeitlich regelmäßig aufeinander folgen, indem das Zeitintervall zwischen jeweils zwei direkt aufeinander folgenden Pulsen konstant ist. Alternativ können die Pulse zeitlich unregelmäßig aufeinander folgen. Das Zeitintervall zwischen zwei direkt aufeinander folgenden Pulsen kann dabei als Zufallsvariable ausgebildet sein. Beispielsweise kann die Folge als PN-Folge (Pseudo-Noise-Folge oder Pseudorauschfolge) ausgeführt sein. Alternativ oder zusätzlich kann die Signaleinheit zur Bearbeitung eines Signals vorgesehen sein, das in der Frequenz moduliert ist, wie insbesondere ein FMCW-Signal (Frequency Modulated Continuous Wave oder Frequenzmodulierte kontinuierliche Welle).

Vorteilhafterweise umfasst die Signaleinheit eine Recheneinheit, die dazu vorgesehen ist, einem erfassten Signal eine Anwendungssituation durch eine auf einer unscharfen und/oder neuronalen Logik basierende Signalverarbeitung zuzuordnen. Mit Hilfe einer unscharfen Logik kann von der Recheneinheit anhand des erfassten Signals eine große und komplexe Informationsmenge schnell ausgewertet werden. Dadurch kann die Werkzeugmaschinenüberwachungsvorrichtung in kurzer Zeit auf Situationen reagieren, die für die Sicherheit eines Bedieners als kritisch erscheinen. Im Unterschied zu kapazitiven Sensoren kann dabei auf eine kritische Anwendungssituation reagiert werden, bevor ein physikalischer Kontakt zwischen dem Bediener und der Werkzeugmaschine entsteht. Durch eine neuronale Logik können vorteilhafte Selbstlernfunktionen der Werkzeugmaschinenüberwachungsvorrichtung erreicht werden.

Gemäß der Erfindung wird vorgeschlagen, dass die Signaleinheit eine Datenbank aufweist, in der einer Anwendungssituation zumindest ein Signalmuster zugeordnet ist. Es kann ein besonders schneller Erkennungsprozess einer Anwendungssituation vorteilhaft erreicht werden, indem eine Korrelation zwischen einem erfassten Signal und einem Signalmuster untersucht wird. Dabei kann eine auf einer unscharfen Logik basierende Korrelationsmethode vorteilhaft genutzt werden.

In einer weiteren Ausführungsform der Erfindung wird vorgeschlagen, dass die Signaleinheit eine programmierbare Datenbank aufweist, in der einer Anwendungssituation bei einem Bearbeitungsprozess ein Vorgehen zum Ändern des Bearbeitungsprozesses zugeordnet ist. Wenn eine bestimmte Anwendungssituation erkannt worden ist, kann dadurch in kurzer Zeit auf diese Anwendungssituation reagiert werden. Die Datenbank ist vorzugsweise im zusammengebauten Zustand einer Werkzeugmaschine und insbesondere durch einen Bediener dieser Werkzeugmaschine programmierbar. Dadurch können Werkeinstellungen der Datenbank vorteilhaft erweitert werden, z.B. wenn die Werkzeugmaschine von einem Bediener mit weiteren Werkzeugen oder weiterem Zubehör nachgerüstet wird.

Vorzugsweise ist die Signaleinheit zur Bestimmung eines Arbeitsfortschritts bei einer Werkstückbearbeitung vorgesehen. Dadurch kann ein hoher Bedienungskomfort bei der Anwendung einer Werkzeugmaschine erreicht werden. Vorteilhaft können verschiedene Arbeitsphasen bei einer Werkstückbearbeitung definiert werden, wobei ein Sicherheitsniveau bei der Überwachung der Werkstückbearbeitung an diese Arbeitsphasen angepasst wird.

Ist die Signaleinheit zur Bestimmung eines Abstands vorgesehen, kann bei einer Werkstückbearbeitung eine Position eines Werkzeugs oder des Werkstücks vorteilhaft überwacht werden. Es können z.B. anormale Positionen, z.B. bei einer Unwucht des Werkzeugs oder bei einem verkehrten Aufstellen eines Werkstücks, schnell erkannt werden. Zusätzlich kann eine Dimension eines Werkstücks bestimmt werden. Vorteilhaft kann ein Arbeitsfortschritt überwacht werden.

Vorzugsweise ist die Signaleinheit zur Bestimmung einer Geschwindigkeit eines zu bearbeitenden Werkstücks vorgesehen. Dadurch kann ein Arbeitsfortschritt vorteilhaft überwacht werden. Die Signaleinheit ist vorzugsweise zur Bestimmung einer Translations- und/oder Rotationsgeschwindigkeit des Werkstücks relativ zu einer statischen Einheit einer Werkzeugmaschine, wie z.B. einem Gehäuse, vorgesehen.

In einer weiteren Ausführungsvariante der Erfindung weist die Werkzeugmaschinenüberwachungsvorrichtung eine elektronische Ausgabeeinheit auf, die zur Ausgabe einer Überwachungsinformation an einen Bediener vorgesehen ist, wodurch Sicherheit und Bedienungskomfort bei einer Anwendung weiter erhöht werden können. Die Ausgabeeinheit kann als Anzeiger, wie z.B. als LED- oder LCD-Display, ausgebildet sein. Alternativ oder zusätzlich kann die Ausgabeeinheit z.B. zur Ausgabe von einem akustischen Signal vorgesehen sein.

Weist die Werkzeugmaschinenüberwachungsvorrichtung eine elektronische Eingabeeinheit auf, die zur Eingabe von zumindest einer Überwachungsinformation vorgesehen ist, kann eine Konfiguration von Überwachungsfunktionen von einem Bediener komfortabel durchgeführt werden.

Weist die Werkzeugmaschinenüberwachungsvorrichtung eine Regelungseinheit auf, die zum Regeln von zumindest einem Parameter eines Werkstückbearbeitungsprozesses vorgesehen ist, kann eine Arbeitsqualität vorteilhaft gesteigert werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen: '
- Fig. 1: eine Kreissäge mit einem Sägeblatt und einer Eingabe-/Ausgabeeinheit in einer Seitenan- sicht,
- Fig. 2: die Kreissäge mit einer Signaleinheit in einer Draufsicht,
- Fig. 3: eine schematische Darstellung der Signalein- heit,
- Fig. 4: ein von der Signaleinheit erzeugtes breitban- diges Signal in einer Amplitude-Zeit- Darstellung,
- Fig. 5: das Signal in einer Amplitude-Frequenz- Darstellung und
- Fig. 6: eine Datenbank der Signaleinheit.

Beschreibung des Ausführungsbeispiels

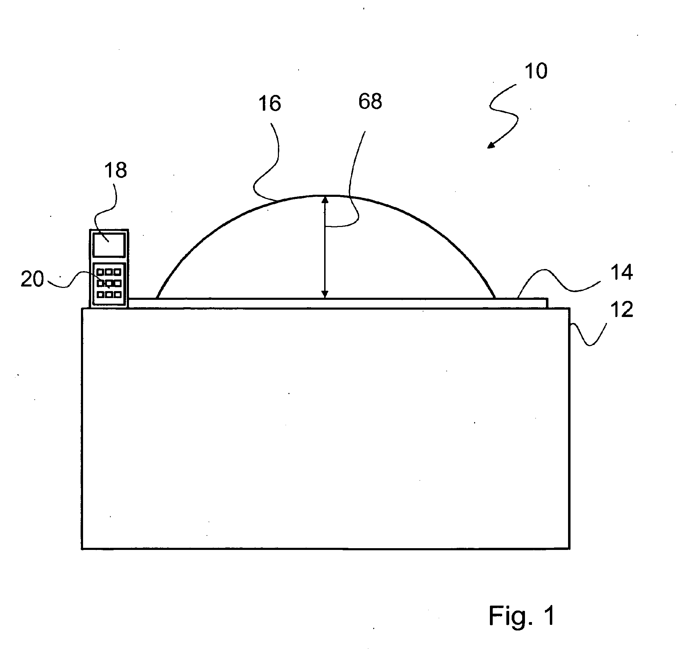

Figur 1 zeigt eine als Kreissäge 10 ausgebildete Werkzeugmaschine. Diese weist ein Gehäuse 12, eine Arbeitsfläche 14 zum Aufstellen eines zu sägenden Werkstücks, ein Sägeblatt 16, eine Ausgabeeinheit 18 mit einem LCD-Display und eine Eingabeeinheit 20 auf.

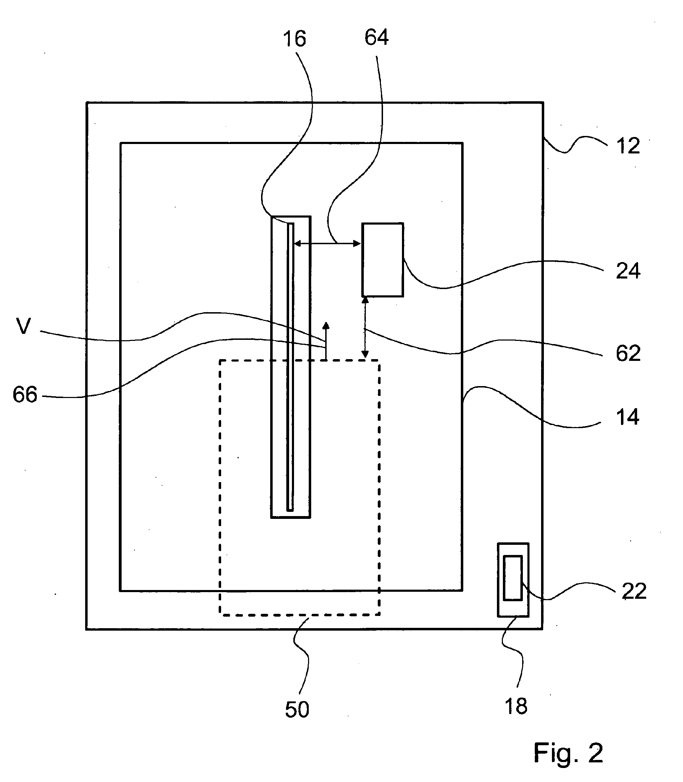

In Figur 2 ist die Kreissäge 10 in einer Draufsicht dargestellt. Zu erkennen sind das Gehäuse 12, die Arbeitsfläche 14, die Ausgabeeinheit 18 und das Sägeblatt 16. Die Ausgabeeinheit 18 ist mit einem Lautsprecher 22 versehen. Die Eingabeeinheit 20 und die Ausgabeeinheit 18 sind Teile einer Werkzeugmaschinenüberwachungsvorrichtung, welche außerdem eine ultrabreitbandige Signaleinheit 24 aufweist.

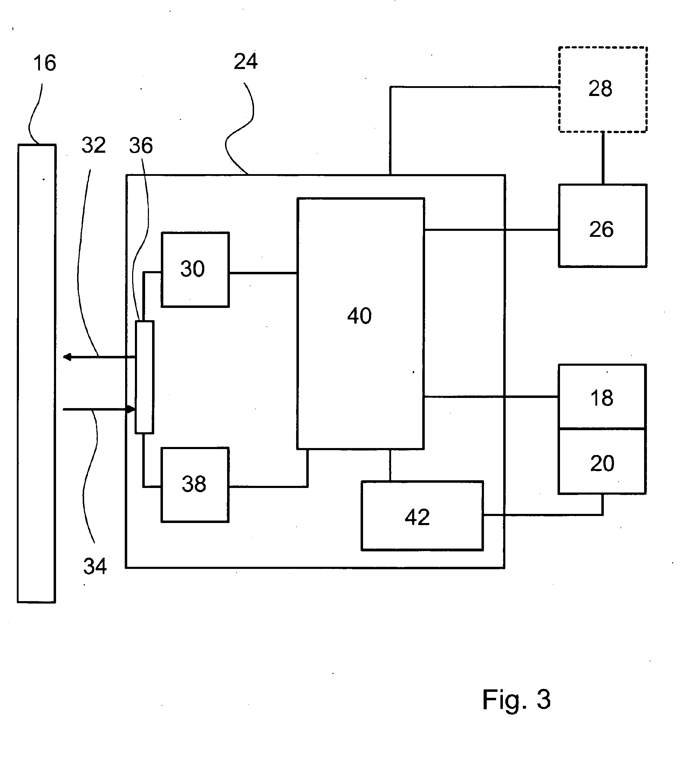

Mittels der Signaleinheit 24 können verschiedene Überwachungsfunktionen bei einer Bearbeitung eines Werkstücks realisiert werden. Der Aufbau und die Funktionsweise der Signaleinheit 24 sind in Figur 3 erläutert.

Figur 3 zeigt die Werkzeugmaschinenüberwachungsvorrichtung mit der Signaleinheit 24, der Eingabeeinheit 20, der Ausgabeeinheit 18 und einer Regelungseinheit 26. Ferner ist eine Steuereinheit 28 der Kreissäge 10 gestrichelt dargestellt. Die Signaleinheit 24 weist eine Sendeinheit 30 auf, die zur Erzeugung eines ultrabreitbandigen Sendesignals 32 vorgesehen ist. Zum Senden des Sendesignals 32 und zum Empfangen eines Empfangssignals 34 ist die Signaleinheit 24 mit einem ultrabreitbandigen Antennenelement 36 versehen. Alternativ zum Antennenelement 36 kann die Signaleinheit 24 eine Kondensatoreinheit aufweisen. Hierzu kann eine Kondensatoranordnung - z.B. zwischen einer metallischen Fläche und dem Sägeblatt 16 - einfach gebildet werden. Nach einem Empfangen des Empfangssignals 34 wird dieses in einer Signalaufbereitungseinheit 38 gefiltert, verstärkt, in eine digitale Form umgewandelt und anschließend auf eine Recheneinheit 40 zur Verarbeitung gegeben. Die Signaleinheit 24 weist ferner eine Speichereinheit 42 auf, in der eine Datenbank 44 mit Überwachungsinformationen gespeichert wird. Diese Datenbank 44, deren Funktion unten beschrieben wird, kann mit Hilfe der Eingabeeinheit 20 von einem Bediener der Kreissäge 10 programmiert werden.

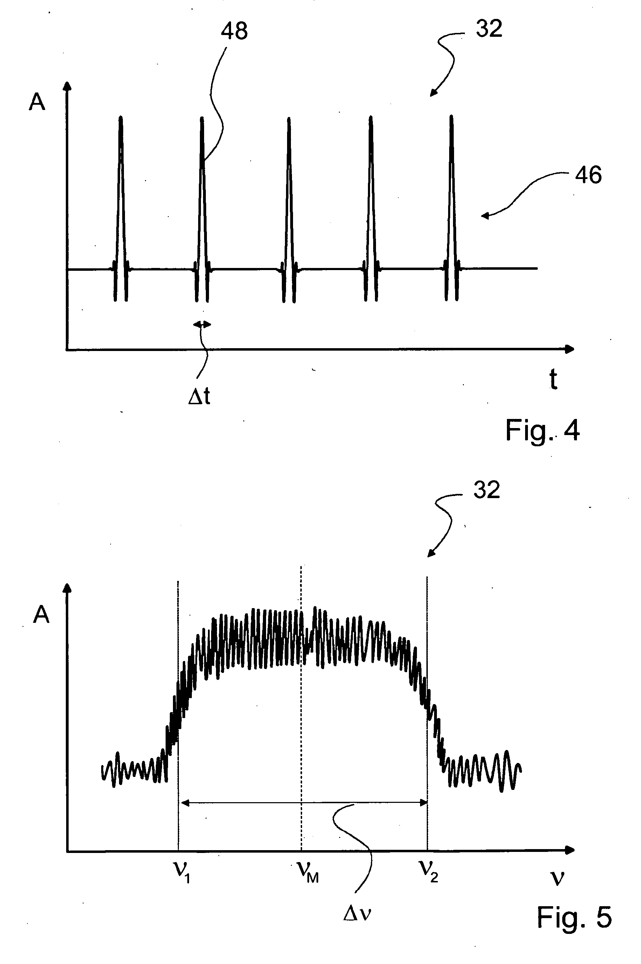

Die Erzeugung eines ultrabreitbandigen Signals ist anhand von Figur 4 und Figur 5 erläutert. In Figur 4 sind eine Amplitude A des Sendesignals 32 auf der Y-Achse und die Zeit t auf der X-Achse aufgetragen. Das Sendesignal 32 weist eine Folge 46 von Pulsen 48 auf, wobei die Pulse 48 jeweils mit einer Pulsdauer Δt von 0,5 ns übertragen werden und regelmäßig aufeinander folgen. Mit der Pulsdauer Δt ist eine Signalbandbreite ΔV des Sendesignals 32 verbunden, die in Figur 5 zu sehen ist. In dieser Figur ist das Spektrum des Sendesignals 32 dargestellt, wobei die Amplitude A auf der Y-Achse und eine Frequenz V auf der X-Achse aufgetragen sind. Das Sendesignal 32 wird mit einer Mittenfrequenz ν_{M} von 5 GHz und einer Signalbandbreite Δν von 2 GHz um diese Mittenfrequenz ν_{M} übertragen. Dabei ist eine Unterfrequenz ν₁ = 4 GHz und eine Oberfrequenz ν₂ = 6 GHz. Alternativ zur Erzeugung von Pulsen 48 sind weitere, dem Fachmann als sinnvoll erscheinende Erzeugungsverfahren von ultrabreitbandigen Signalen denkbar. Das Sendesignal 32 wird außerdem mit einer Sendeleistung unter -45 dBm überragen, so dass unerwünschte Interferenzen mit weiteren Funkeinheiten vermieden werden können.

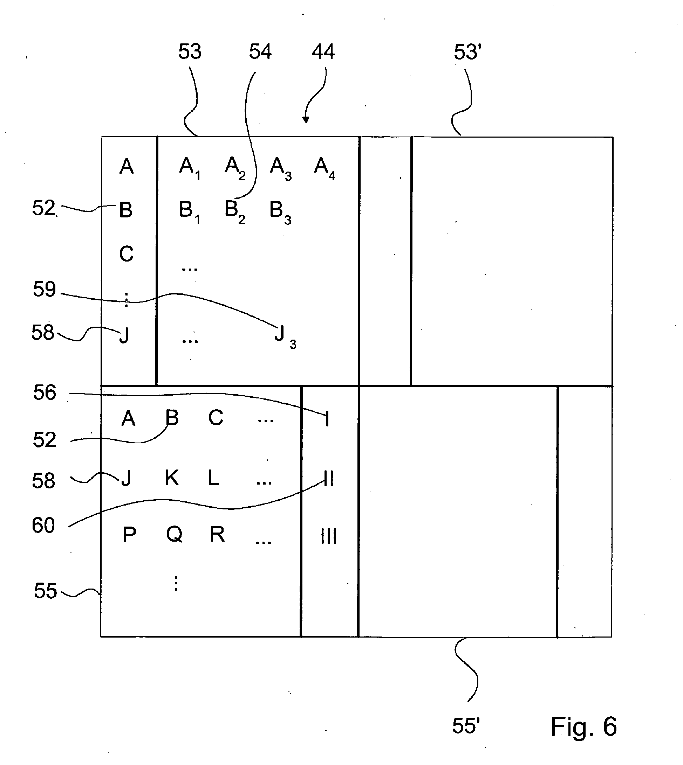

Es wird angenommen, dass ein Bediener ein Sägen eines Werkstücks 50, welches in Figur 2 gestrichelt dargestellt ist, durchführen will. Hierzu wird das Werkstück 50 auf die Arbeitsfläche 14 aufgestellt. Diese Anwendungssituation wird als Anwendungssituation 52'bezeichnet. Das Aufstellen des Werkstücks 50 induziert eine Änderung des die Signaleinheit 24 umgebenden Dielektrikums, welche sich in einer Änderung des Empfangssignals 34 widerspiegelt. Beispielsweise ist nach dem Aufstellen eine Resonanzfrequenz im Frequenzspektrum des Empfangssignals 34 verschoben. Die Recheneinheit 40 kann diesem erfassten Empfangssignal 34 die Anwendungssituation 52 zuordnen. Dies erfolgt mittels der Datenbank 44, die in Figur 6 dargestellt ist. In der Datenbank 44 sind in einer Zuordnungstabelle 53 Signalmuster, z.B. A₃, B₂ usw., jeweils einer Anwendungssituation A bzw. B usw. zugeordnet. Es sei im betrachteten Beispiel angenommen, dass die Anwendungssituation 52, welche von der Recheneinheit zu erkennen ist, dem Eintrag B in der Datenbank entspricht. Ausgehend vom erfassten Empfangssignal 34 untersucht die Recheneinheit 40 eine Korrelation zwischen dem Empfangssignal 34 und den Signalmustern, bis ein Signalmuster 54, welches die größte Korrelation mit dem erfassten Empfangssignal 34 aufweist, bestimmt wird. Im betrachteten Beispiel wird angenommen, dass dieses Signalmuster 54 dem Eintrag B₂ in der Datenbank 44 entspricht. Die Bestimmung des Signalmusters 54 wird mittels einer Methode der Fuzzy-Logik (unscharfe Logik) durchgeführt. In der Datenbank sind in einer weiteren Zuordnungstabelle 55 Anwendungssituationen A, B, C usw. Vorgehen I, II, III usw. für die Werkstückbearbeitung zugeordnet. Wenn eine Anwendungssituation von der Recheneinheit 40 erkannt wird, kann auf diese Anwendungssituation reagiert werden, indem die Steuereinheit 28, welche mit der Recheneinheit 40 verbunden ist, dem Vorgehen entsprechend einen Verlauf der Werkstückbearbeitung ggf. modifiziert. Im betrachteten Beispiel ist die Anwendungssituation 52 einem Vorgehen 56 zugeordnet, das in der Datenbank dem Eintrag I entspricht. Bei diesem Vorgehen 56 wird der Betrieb der Kreissäge 10 ungeändert fortgesetzt.

Es wird anschließend angenommen, dass ein Finger des Bedieners dem Sägeblatt 16 angenähert wird. Dies widerspiegelt sich im Spektrum des Empfangssignals 34 durch multiple Resonanzfrequenzen, die das menschliche Gewebe charakterisieren. Diese Anwendungssituation ist als Anwendungssituation 58 bezeichnet, die von der Recheneinheit 40 anhand des erfassten Empfangssignals 34 durch die Bestimmung eines korrelierten Signalmusters 59 erkannt wird. In der Datenbank 44 ist der Anwendungssituation 58 ein Vorgehen 60 zugeordnet, in dem der Betrieb der Kreissäge 10 abgeschaltet wird. Ferner können weitere Signalmuster für die Erkennung von Anwendungssituationen in Betracht genommen werden. Als Signalmuster kann z.B. eine bestimmte Verschiebungsgeschwindigkeit einer Resonanzfrequenz im Spektrum des Empfangssignals 34 betrachtet werden, wobei eine "langsame" und eine "schnelle" Verschiebung jeweils einer Anwendungssituation zugeordnet werden können. Mittels der Eingabeeinheit 20 kann ein Bediener eine Konfiguration der Datenbank 44 durchführen. Der Bediener kann insbesondere die Datenbank 44 an neue Anwendungen der Kreissäge 10 anpassen, z.B. bei dem Einsatz von weiteren Sägemitteln oder neuartigem Zubehör, und/oder er kann neue Vorgehen einstellen, die bestimmten Anwendungssituationen zugeordnet sind. Es können Einträge in den Zuordnungstabellen 53 und 55 modifiziert werden, und/oder es können neue Zuordnungstabellen 53' und 55' geschaffen werden. Zur Erweiterung der Datenbank 44 mit neuen Anwendungssituationen und neuen Vorgehen für diese Anwendungssituationen ist ein Lernmodus der Kreissäge 10 vorgesehen. In diesem Modus können Anwendungssituationen von dem Bediener absichtlich geschaffen werden, wobei die Recheneinheit 40 selbständig lernen kann, solche Anwendungssituationen zu erkennen und zu ermitteln, welche Vorgehen diesen Anwendungssituationen angepasst sind. Dabei lernt die Recheneinheit 40, diese Anwendungssituationen jeweils mit einem oder mehreren Signalmustern zu korrelieren. Hierzu arbeitet die Recheneinheit 40 in diesem Modus auf der Basis einer neuronalen Logik, die eine solche Selbstlernfunktion erlaubt. Dabei kann der Bediener ein Sicherheitsniveau jederzeit einstellen, bis ein gewünschtes Vorgehen für eine bestimmte Anwendungssituation erreicht ist. Dieses kann automatisch in die Datenbank 44 gespeichert werden.

Mittels der Recheneinheit 40 kann ferner ein Abstand bestimmt werden. Hierzu kann die Recheneinheit 40 eine Laufzeit zwischen der Erzeugung des Sendesignals 32 und dem Empfang des Empfangssignals 34 erfassen, wie z.B. durch Durchführung eines Phasenvergleichs zwischen dem Sendesignal 32 und dem Empfangssignal 34. Bei der Werkstückbearbeitung werden ein Abstand 62 zum Werkstück 50 sowie ein Abstand 64 zum Sägeblatt 16 bestimmt. Durch die Bestimmung des Abstands 62 kann ein Arbeitsfortschritt bei der Bearbeitung des Werkstücks 50 überwacht werden. Körperverletzungen aufgrund einer Unwucht des Sägeblatts 16 können durch eine Überwachung des Abstands 64 vermieden werden, indem anormale Schwingungen des Sägeblatts 16 erkannt werden und eine Reduktion der Drehzahl des Sägeblatts 16 von der Steuereinheit 28 durchgeführt wird. Durch eine Auswertung von Frequenz- und/oder Phasenverschiebungen zwischen dem Sendesignal 32 und dem Empfangssignal 34 kann eine Geschwindigkeit V, mit der das Werkstück 50 in Arbeitsrichtung 66 geschoben wird, überwacht werden. Diese Information kann ebenfalls zur Überwachung des Werkstückbearbeitungsfortschritts dienen. Zusätzlich können verschiedene Arbeitsphasen einer Werkstückbearbeitung definiert werden, wobei bestimmte Überwachungsfunktionen an diese Arbeitsphasen angepasst werden. In der Startphase nach dem Aufstellen des Werkstücks 50 kann insbesondere die Position des Werkstücks 50relativ zum Sägeblatt 16 überwacht werden. Am Ende der Werkstückbearbeitung können insbesondere die Überwachungskriterien einer Fingerposition relativ zum Sägeblatt 16 verschärft werden.

Ferner können durch die Eingabeeinheit 20 Arbeitsparameter für eine Werkstückbearbeitung eingestellt werden, wie z.B. eine Drehzahl des Sägeblatts, eine Sägetiefe 68 (Figur 1), ein Typ eines Sägeblatts usw. Arbeitsparameter, z.B. die Sägetiefe 68, die von der Werkzeugmaschinenüberwachungsvorrichtung überwacht werden, können durch die Regelungseinheit 26 auf einem von dem Bediener eingestellten Wert gehalten werden. Mittels der Ausgabeeinheit 18 kann der Bediener über die überwachten Arbeitsparameter informiert werden. Diese können auf dem LED-Display angezeigt werden. Wenn ein Arbeitsparameter eine voreingestellte Schwelle erreicht und/oder bei bestimmten Anwendungssituationen, z.B. bei einem verkehrten Aufstellen eines Werkstücks, kann der Bediener mittels eines akustischen Signals, das über den Lautsprecher 22 übertragen wird, informiert werden. Durch eine Auswertung des ultrabreitbandigen Empfangssignals 34 ist eine Messung und/oder Überwachung von weiteren Arbeitsparametern denkbar, wie z.B. einer Dimension, eines Feuchtigkeitsgrads eines Werkstücks usw.

Die Werkzeugmaschinenüberwachungsvorrichtung kann mit Vorteil bei weiteren stationären Werkzeugmaschinen eingesetzt werden, wie z.B. Bandsägen, Kappsägen, Hobeln usw. Des Weiteren ist ein Einsatz der Werkzeugmaschinenüberwachungsvorrichtung bei handgehaltenen Werkzeugmaschinen, wie z.B. Kreissägen, Stichsägen, Kettensägen, usw. ebenfalls denkbar. Dabei kann die Werkzeugmaschinenüberwachungsvorrichtung durch die Signaleinheit einen vorteilhaften Schutz bei kritischen Anwendungssituationen, wie z.B. ein Hochschlagen einer handgehaltenen Kreissäge, bieten.

### Bezugszeichen

- 10: Kreissäge
- 12: Gehäuse
- 14: Arbeitsfläche
- 16: Sägeblatt
- 18: Ausgabeeinheit
- 20: Eingabeeinheit
- 22: Lautsprecher
- 24: Signaleinheit
- 26: Regelungseinheit
- 28: Steuereinheit
- 30: Sendeeinheit
- 32: Sendesignal
- 34: Empfangssignal
- 36: Antennenelement
- 38: Signalaufbereitungs- einheit
- 40: Recheneinheit
- 42: Speichereinheit
- 44: Datenbank
- 46: Folge
- 48: Puls
- 50: Werkstück
- 52: Anwendungssituation
- 53: Zuordnungstabelle
- 53': Zuordnungstabelle
- 54: Signalmuster
- 55: Zuordnungstabelle
- 55': Zuordnungstabelle
- 56: Vorgehen
- 58: Anwendungssituation
- 59: Signalmuster
- 60: Vorgehen
- 62: Abstand
- 64: Abstand
- 66: Arbeitsrichtung
- 68: Sägetiefe
- t: Zeit
- ν: Frequenz
- Δt: Pulsdauer
- Δν: Signalbandbreite
- V_{M}: Mittenfrequenz
- ν₁: Unterfrequenz
- ν₂: Oberfrequenz
- A: Amplitude
- V: Geschwindigkeit

## Patentansprüche

1. Werkzeugmaschinenüberwachungsvorrichtung, mit einer Signaleinheit (24), **dadurch gekennzeichnet, dass** die Signaleinheit (24) eine Sendeeinheit (30) aufweist, die zur Erzeugung eines ultrabreitbandigen Sendesignals (32) vorgesehen ist, wobei die Signaleinheit eine Datenbank (44) aufweist, in der einer Anwendungssituation zumindest ein Signalmuster zugeordnet ist.

2. Werkzeugmaschinenüberwachungsvorrichtung nach Anspruch 1, **dadurch gekennzeichnet, dass** die Signaleinheit (24) zur Bearbeitung eines Signals (32, 34) vorgesehen ist, welches eine Folge (46) von Pulsen (48) aufweist.

3. Werkzeugmaschinenüberwachungsvorrichtung nach Anspruch 1 oder 2, **dadurch gekennzeichnet, dass** die Signaleinheit (24) eine Recheneinheit (40) umfasst, die dazu vorgesehen ist, einem erfassten Signal (34) eine Anwendungssituation (52, 58) durch eine auf einer unscharfen und/oder neuronalen Logik basierende Signalverarbeitung zuzuordnen.

4. Werkzeugmaschinenüberwachungsvorrichtung nach einem der vorhergehenden Ansprüche, **dadurch gekennzeichnet, dass** die Signaleinheit (24) eine programmierbare Datenbank (44) aufweist, in der einer Anwendungssituation (52, 58) bei einem Bearbeitungsprozess ein Vorgehen (56, 60) zum Ändern des Bearbeitungsprozesses zugeordnet ist.

5. Werkzeugmaschinenüberwachungsvorrichtung nach einem der vorhergehenden Ansprüche, **dadurch gekennzeichnet, dass** die Signaleinheit (24) zur Bestimmung eines Arbeitsfortschritts bei einer Werkstückbearbeitung vorgesehen ist.

6. Werkzeugmaschinenüberwachungsvorrichtung nach einem der vorhergehenden Ansprüche, **dadurch gekennzeichnet, dass** die Signaleinheit (24) zur Bestimmung eines Abstands (62, 64) vorgesehen ist.

7. Werkzeugmaschinenüberwachungsvorrichtung nach einem der vorhergehenden Ansprüche, **dadurch gekennzeichnet, dass** die Signaleinheit (24) zur Bestimmung einer Geschwindigkeit (V) eines zu bearbeitenden Werkstücks (50) vorgesehen ist.

8. Werkzeugmaschinenüberwachungsvorrichtung nach einem der vorhergehenden Ansprüche, **gekennzeichnet durch** eine elektronische Ausgabeeinheit (18), die zur Ausgabe einer Überwachungsinformation an einen Bediener vorgesehen ist.

9. Werkzeugmaschinenüberwachungsvorrichtung nach einem der vorhergehenden Ansprüche, **gekennzeichnet durch** eine elektronische Eingabeeinheit (20), die zur Eingabe von zumindest einer Überwachungsinformation vorgesehen ist.

10. Werkzeugmaschinenüberwachungsvorrichtung nach einem der vorhergehenden Ansprüche, **gekennzeichnet durch** eine Regelungseinheit (26), die zum Regeln von zumindest einem Parameter (68) eines Werkstückbearbeitungsprozesses vorgesehen ist.

11. Werkzeugmaschine mit einer Werkzeugmaschinenüberwachungsvorrichtung nach einem der vorhergehenden Ansprüche.

## Claims

1. Machine tool monitoring apparatus, having a signal unit (24), **characterized in that** the signal unit (24) has a transmission unit (30) which is provided for the purpose of producing an ultra-wideband transmitted signal (32), wherein the signal unit has a database (44) in which an application situation has at least one associated signal pattern.

2. Machine tool monitoring apparatus according to Claim 1, **characterized in that** the signal unit (24) is provided for the purpose of processing a signal (32, 34) which has a train (46) of pulses (48).

3. Machine tool monitoring apparatus according to Claim 1 or 2, **characterized in that** the signal unit (24) comprises a computation unit (40) which is provided for the purpose of associating an application situation (52, 58) with a sensed signal (34) by means of signal processing based on fuzzy and/or neural logic.

4. Machine tool monitoring apparatus according to one of the preceding claims, **characterized in that** the signal unit (24) has a programmable database (44) in which an application situation (52, 58) has, during a processing process, an associated procedure (56, 60) for changing the processing process.

5. Machine tool monitoring apparatus according to one of the preceding claims, **characterized in that** the signal unit (24) is provided for the purpose of determining work progress during workpiece processing.

6. Machine tool monitoring apparatus according to one of the preceding claims, **characterized in that** the signal unit (24) is provided for the purpose of determining a distance (62, 64).

7. Machine tool monitoring apparatus according to one of the preceding claims, **characterized in that** the signal unit (24) is provided for the purpose of determining a speed (V) of a workpiece (50) to be processed.

8. Machine tool monitoring apparatus according to one of the preceding claims, **characterized by** an electronic output unit (18) which is provided for the purpose of outputting a piece of monitoring information to a user.

9. Machine tool monitoring apparatus according to one of the preceding claims, **characterized by** an electronic input unit (20) which is provided for the purpose of inputting at least one piece of monitoring information.

10. Machine tool monitoring apparatus according to one of the preceding claims, **characterized by** a regulatory unit (26) which is provided for the purpose of regulating at least one parameter (68) of a workpiece processing process.

11. Machine tool having a machine tool monitoring apparatus according to one of the preceding claims.

## Revendications

1. Dispositif de surveillance de machine-outil comportant une unité de signalisation (24),
**caractérisé en ce que**
l'unité de signalisation (24) présente une unité d'émission (30) prévue pour former un signal d'émission (32) en bande ultra-large et
**en ce que** l'unité de signalisation présente une base de données (44) dans laquelle au moins un motif de signal est associé à une situation d'utilisation.

2. Dispositif de surveillance de machine-outil selon la revendication 1, **caractérisé en ce que** l'unité de signalisation (24) est prévue pour traiter un signal (32, 34) qui présente une succession (46) d'impulsions (48).

3. Dispositif de surveillance de machine-outil selon les revendications 1 ou 2, **caractérisé en ce que** l'unité de signalisation (24) comporte une unité de calcul (40) prévue pour associer par un traitement flou et/ou basé sur une logique neuronale une situation d'utilisation (52, 58) à un signal (34) détecté.

4. Dispositif de surveillance de machine-outil selon l'une des revendications précédentes, **caractérisé en ce que** l'unité de signalisation (24) présente une base de données (44) programmable dans laquelle un mode opératoire (56, 60) permettant de modifier l'opération de travail est associé à une situation d'utilisation (52, 58) dans le cadre d'une opération de traitement.

5. Dispositif de surveillance de machine-outil selon l'une des revendications précédentes, **caractérisé en ce que** l'unité de signalisation (24) est prévue pour déterminer la poursuite d'un travail lors du traitement d'une pièce.

6. Dispositif de surveillance de machine-outil selon l'une des revendications précédentes, **caractérisé en ce que** l'unité de signalisation (24) est prévue pour déterminer une distance (62, 64).

7. Dispositif de surveillance de machine-outil selon l'une des revendications précédentes, **caractérisé en ce que** l'unité de signalisation (24) est prévue pour déterminer une vitesse (V) d'une pièce (50) à traiter.

8. Dispositif de surveillance de machine-outil selon l'une des revendications précédentes, **caractérisé par** une unité électronique d'émission (18) qui est prévue pour émettre une information de surveillance à un opérateur.

9. Dispositif de surveillance de machine-outil selon l'une des revendications précédentes, **caractérisé par** une unité électronique d'introduction (20) prévue pour introduire au moins une information de surveillance.

10. Dispositif de surveillance de machine-outil selon l'une des revendications précédentes, **caractérisé par** une unité de régulation (26) prévue pour réguler au moins un paramètre (68) d'une opération de traitement de pièce.

11. Machine-outil dotée d'un dispositif de surveillance de machine-outil selon l'une des revendications précédentes.
